# EUROPEAN PATENT APPLICATION

(11) **EP 3 915 816 A1**
(43) Date of publication of application: **01.12.2021**
(21) Application number: 20382440.4
(22) Date of filing: 25.05.2020
(51) Int. Cl.: B60J 5/04

(54) **DOOR MODULE WITH PERIPHERAL SEAL**

(71) Applicant: Torralba, Carlos, 08401 Granollers (ES)
(72) Inventor: MIRA PALACIOS, Jorge, 08401 Granollers (ES)
(74) Representative: Ponti & Partners, S.L.P

(57) **Abstract**

The present invention relates to a module for doors, tailgates or similar, to be installed in vehicles for the insulation of the wet areas from the dry areas of the structures of said doors, tailgates or similar, executed by means of a process of bi-injection or multiple injection, in which a monoblock module with regard to the support panel and the seal is formed, its configuration including a flexing zone of the perimeter wing to compensate for the hardnesses employed in the bi-injection of the seal, where said seal features two or more lips with configurations that ensure a correct and secure seal.

## Description

The present invention relates to a module for doors, tailgates or similar, to be installed in vehicles for the insulation of the wet areas from the dry areas of the structures of said doors, tailgates or similar.

The invention also relates to the process of manufacture of this module, likewise to the vehicle incorporating the same.

### Background of the invention

Vehicles, in their manufacturing process, incorporate panels at various locations of their structure in order to seal the interior against the possible entry of water from the exterior.

These panels are of greater importance in doors and tailgates wherein systems with elements in contact with the exterior are installed, and which are integrated between the structure and the panel itself. The panels are attached to said vehicle structure by means of various anchor points, and preferably featuring seals or gaskets at the perimeter thereof to prevent the passage of water through the same. These seals may also be found at the anchor points or at other points, according to the design of the vehicle.

The door and tailgate panel seals known are comprised of elastic materials, usually with a hardness of 5 Shore A. On the one hand, this enables the easy adaptation of the panel to its position of attachment, this installation operation being simple for the person performing the operation, but involving the possibility of there not being a correct watertight attachment when there are variations in the construction measurements, principally in the structure of the vehicle.

In addition to the above, this type of seal with reduced hardness, in many cases, creates a lack of elastic memory, a lack of watertightness and maladjustment after a considerable period of time, and its dismantling and reattachment become necessary.

The method of application of the seal to the perimeter and to the points where said seal is required is habitually the sticking thereof to the panel support, when completely formed, by means of additional adhesive agents. This application is performed by following the entire perimeter of the panel and the points or areas of contact which must be watertight with automated applicators which apply the seal with the corresponding adhesive. The above involves an additional outlay in auxiliary equipment and dead time while working on equipment different from that of the constitution of the support.

While enabling great freedom in the use of very different materials, with regard to hardness, between the support and the seal, it being possible to employ a very soft seal enabling simple installation and adaptation, this process causes the join between the panel support and the seal to be susceptible to distortion with relative ease due to environmental conditions, principally the temperature, suffered by the panel and the vehicle structure over time.

For this use, seals are known which incorporate two sealing lips, identical in shape, thus to increase the watertightness properties of the panel once installed on the structure.

### Description of the invention

The objective of the present invention is to provide a vehicle door module, likewise a method of manufacture of said module and a vehicle incorporating the same, which resolve the aforementioned drawbacks, and presenting other advantages to be described below.

Firstly, it is intended to clarify certain terms employed, in order that they should not be interpreted as limitative, or that obvious changes of configuration/application might vary the reference employed in the present description without changing the object of the protection.

In particular, reference should be made to the fact that the door module is associated preferably to its installation in vehicle doors and tailgates, its name being derived therefrom, although it should be understood that this includes any application of modules covering the structure/chassis of a vehicle, for the coverage and waterproofing of the interior by means of these modules featuring seals.

Thus, and in accordance with this objective, in a first aspect the present invention is based on a door module of the type installed on the structure of vehicle doors, tailgates or similar, separating the wet area from the dry area of the vehicle manufactured. One or more systems related to the functionalities of the door may be installed on this panel.

This door module comprises a support panel with a seal, at least at the perimeter thereof, where advantageously said support panel and seal form a monoblock assembly obtained by means of bi-injection or multi-injection, in the same step and with the same production equipment.

The invention is also characterised in that the support panel comprises at its peripheral area, prior to the perimeter seal, at least one flexing line or zone of the plane of the panel at said peripheral zone prior to the perimeter seal.

Likewise, the invention has the advantageous characteristic that at least at this peripheral zone prior to the seal, and starting from said at least one flexing line or zone, it presents a flexible movement with regard to the pressure exerted for its attachment to the structure of the door.

This advantageous configuration enables the provision of a module produced as a single block or item, called monoblock, at least at the above parts and characteristics. This disposition of a single item enables the improvement of the rate of production, it being performed in a single stage by the same item of equipment, executing the injection into the same mould, simultaneously or immediately consecutively, of the material forming the support, with greater rigidity, and the material forming the seal, with greater elasticity.

In this way mechanical or adhesive joins, or other subsequent steps, are avoided; these also being susceptible to losing their properties with the passage of time and/or the disassembly of the module from its installation in the structure of the vehicle.

The flexing line or zone is located, preferably, at a perimetric zone of the module; that is, within the zone corresponding to the most external 30% of the support, measured from its geometric centre. The flexing of the "wing" formed on the other side of the flexing line or zone enables the module to adapt its perimetric section to the variations and tolerances of the components of the structure of the vehicle without exerting excessive tension on the points of attachment of the module.

This flexing enables an easier attachment by the fitter of the panel to the structure of the vehicle as, due to the use of elastomers of a greater hardness than those commonly used in the state of the art for the formation of the seal in the constitution of the door module, this flexing of the part where the seal is located enables that the pressure necessary for its correct installation may be absorbed in part by said flexing, advantageously enabling the use of greater hardnesses in the seal. This seal, although of a greater hardness than those known for this application in the state of the art, continues to feature the characteristics of flexing/elasticity for its adaptation against the structure of the door when exerting the attachment pressure on said door structure.

The use of a thermoplastic elastomer for this seal is derived from the requirement of having a Compression Hardness as low as possible, enabling the compression of the seal by 20%, 40% or 70%, the calculation being based on the force necessary per unit of surface to achieve said compression. Preferably values of less than 10 MPa.

A second requirement is the degree of permanent compression, a property that is quantified in two ways: A first value is obtained by leaving the elastomer compressed at 50% for 24 hours at 50 °C (Compression Set A), while a second value characterising the degree of permanent compression is obtained by leaving the elastomer compressed at 25% for 24 hours at 90 °C (Compression Set B). The percentage of lack of recovery 30 minutes subsequent to ceasing to exert the pressure on the elastomer will correspond to said value. In the present invention, preferred values of the degree of permanent compression are considered to be percentages lower than 5% (A) and 15% (B).

Finally, another aspect to be borne in mind regarding the thermoplastic elastomer chosen is the recovery from compression which, in all cases, is expected to be as near to 100% as possible.

Regarding these parameters, for the injection of the thermoplastic elastomers in the production process, these should not have a hardness as low as that of the seals formed with bi-components applied by specific equipment in independent processes not including injection. The drawback of this known application of bi-components in processes not performed simultaneously and in different equipment is that it increases production costs when compared with the invention, which compensates the values of hardness with the advantageous configuration designed for the door module support.

The flexibility of this "wing" enables the variation of the position of the same and therefore of the seal, preferably up to 10 mm from its original position, returning to its original position at the instant when the pressure ceases to be exerted. This variation, enabled by the flexing of the support, could be greater in the case of specific design requirements. In addition, with this flexing line or zone a point of tension is achieved on the support located beyond the attachment points, as is the exertion of a constant pressure on the seal against the structure of the vehicle, due to the return force to the original position of said perimeter of the flexed support panel.

Insisting on the advantageous concept mentioned above, the configuration of this "wing" enables the reduction of the force necessary to compress the elastomer (a factor described above as Compression Hardness, which should be minimal); it also enables a lower permanent deformation due to the temperature, as the material of the support is more stable to temperature, and therefore the assembly will also be so; and it returns better to its initial dimensions thanks to this composition of the support panel.

Preferably, the join between the seal and the perimeter of the panel is executed with a joining zone with a transversal cross-section not perpendicular to the surface of the panel at the point of joining, increasing the surface of adhesion between perimeter seal and panel, compared with a surface with a transversal cross-section perpendicular to the panel surface.

The execution of this join, performed during the process of bi-injection or multi-injection, in the same stage and with the same equipment, is carried out by means of the injection of the material of the seal on the area of the support panel just injected. The shape of this join zone, it being executed advantageously in a non-perpendicular manner, which would entail a smaller surface, enables a greater join surface and consequently a better chemical bond and better durability of the join.

Also preferably, the join between the seal and the perimeter of the panel is executed in a manner with a non-rectilinear transversal cross-section, increasing the contact surface between perimeter seal and panel by at least 5% compared with a join with a transversal cross-section perpendicular to the surface of the panel.

Alternatively or additionally to the non-perpendicularity of the join zone described above as an option, by executing the transversal cross-section in a curve or zigzag, the surface area of said join is increased considerably, with the aforementioned advantages, being evident as from an increase of 5%.

Optionally, the join with a non-rectilinear cross-section may be achieved with the panel, at its perimeter zone, comprising a channel to receive the seal with an at least partially convex shape.

In addition to increasing the surface area of the join, as in the previous case, this shape enables an increase in the rigidity of the zone of application of the seal.

In addition to the above, the channel features at its internal zone for the fitting of the seal a concave base, a rib or protrusion from its convex shape throughout the length of the channel.

With this configuration of the channel, a reduction is achieved in the quantity of material employed in the manufacture of the seal, as less material is necessary to fill the channel than if the material were totally convex, maintaining the elastic properties required with the elasticity of the material of the seal. The cost of this option is lower, as the increase in the quantity of material used in the support panel to make this longitudinal protrusion, this material being less costly, is compensated by the savings in the material of the seal, which is more costly. This longitudinal rib also endows the assembly with greater rigidity at said perimeter.

In accordance with a possible embodiment of the invention, the perimetric seal features two sealing lips. In other alternative embodiments, this perimetric seal features three or more sealing lips.

These possible embodiments, with two or more sealing lips, enable the execution of at least two points of sealing contact in order to ensure the same and not to depend on a single lip.

Preferably, the aforementioned seals feature sealing lips which slope with regard to the axis perpendicular to the plane of the zone of contact of the seal and the structure, at least two of these lips remaining on the two sides of said perpendicular, one flexing in a direction opposite to that of the other.

With this configuration, a double seal is ensured; as the two lips affect on the structure against which they are to perform their sealing function; one might remain above the other; thus, the sealing function would only be performed by one. There being at least two lips at different angles on each side of the axis perpendicular to the surface of contact with the structure, on entering into contact with this structure each lip with the aforementioned slope will flex/become distorted in a direction opposite to that of the other lip, thus ensuring a double seal.

As a possible option for the configuration of the sealing lips mentioned in the previous paragraphs, at least some of these sealing lips are of a larger size than the others. This characteristic enables a principal seal contact which absorbs possible dispersions or greater tolerances.

In a preferred embodiment of the invention, the panel is executed in a polymeric material of the polypropylene type in the majority of its composition. This composition, with a greater proportion of polypropylene than any other component which might be added, endows the supporting panel with the rigidity required and a highly significant chemical bond with the materials employed for the seal when executing the bi-injection.

Preferably, the seal is comprised of at least one thermoplastic elastomer, vulcanised or otherwise, with a final hardness greater than 15 Shore A. This hardness, although greater than that preferred in the state of the art for assembly, enables the elastomer providing the same to be injected together with that forming the supporting panel.

Notwithstanding this greater hardness employed in the seal of the present invention, its deformation is enabled for its adaptation to the surface of contact of the door structure as a consequence of the pressure on assembly, achieving the sealing of the door module against the door structure.

As has been mentioned above, this greater hardness of the seal in comparison with the conventional seals known is advantageously compensated by the flexing line or zone, enabling the use of two polymers with a considerable difference in hardness; the polymer of the support panel and the elastomer of the seal, which can be bi-injected in the same step either simultaneously or consecutively, with the aforementioned advantages.

Specifically, the composition of the seal comprises at least thermoplastic elastomer (TPE), thermoplastic polyurethane (TPU), thermoplastic polyolefins (TPO) and/or thermoplastic elastomer vulcanisates (TPV).

In accordance with the objectives of the invention, and with regard to a second aspect, the present invention is also based on a vehicle which in at least one of its doors, tailgate or similar features a door module such as that disclosed in the characteristics shown in the above object of the invention.

Also in accordance with the objectives of the invention, and with regard to a third aspect, the present invention is based on a method of manufacture of a door module, this being of the type which carry out the join between a seal and the perimeter of a panel for attachment to the structure of a vehicle door, forming a door module such as that described in the characteristics of the first aspect defined in this specification.

This method, advantageously, comprises at least the following steps:
- the injection into a mould of a polymer of lower elasticity than that of the thermoplastic elastomer corresponding to the seal, in order to form the panel of the module;
- the injection, in the same mould, into the cavities peripheral to those into which the panel is injected, of thermoplastic elastomer for the formation of the perimeter seal.

By way of characterisation, the two above injection steps are performed in the same injection equipment either simultaneously or immediately consecutively, in this last case injecting first the material of the panel, which is more rigid than that of the seal.

The performance of these stages enables the more rapid, less costly and more durable execution of a panel such as that described above, thanks to the configuration described.

Optionally, the injection of the thermoplastic elastomer into the peripheral cavities is performed via two or more injection points located in such a way that the projection of said injection points is remote from the cavity where this seal is created.

This method of performing the injection does not weaken the seal during demoulding.

As has been stated, the seal is located at least at the perimeter of the module, although it may be incorporated at other points, such as those adjacent to the points of attachment to the door structure or at the anchor points of auxiliary elements installed on the door module. These additional points of injection of the seal will require specific injection points for the same.

These above characteristics enable the obtaining of a door module with a configuration of support panel and seal, with improved characteristics, similar ease of attachment and manufacture optimised in a single stage of bi-injection, only made possible by the present advantageous configuration of the module.

### Brief description of the drawings

For the better understanding of the description made herein, a set of drawings has been provided wherein, schematically and solely by way of a non-limiting example, a practical case of an embodiment is portrayed.
Figure 1 is a schematic elevational view of a door module in accordance with the configuration of the present invention.
Figure 2 is a partial cross-sectional view of the module at its perimeter zone, the panel having a single flexing line and the seal two lips. Two positions are portrayed, one wherein the panel is in a position prior to its attachment to the door structure (2a) and the other in an attached position (2b).
Figure 3 is a partial cross-sectional view of the module at its perimeter zone, the panel having two flexing lines and the seal two lips. Two positions are portrayed, one wherein the panel is in a position prior to its attachment to the door structure (3a) and the other in an attached position (3b).
Figure 4 portrays two schematic views of transversal cross-sections of the seal, one with two lips, figure 4a, and the other with three lips, figure 4b.
Figure 5 portrays a schematic view of a transversal cross-section of the seal during a bi-injection process on a perimeter channel of the support panel. Two alternatives are portrayed, one with an internal longitudinal rib within the channel and three lips (5a) and the other with no longitudinal rib in the channel and with two widely separated lips of different sizes (5b).
Figure 6 is a schematic view of a vehicle with the module installed in one of its doors.
Figure 7 is a diagram of the method of manufacture employed on the panel executed in the same module.

### Description of a preferred embodiment

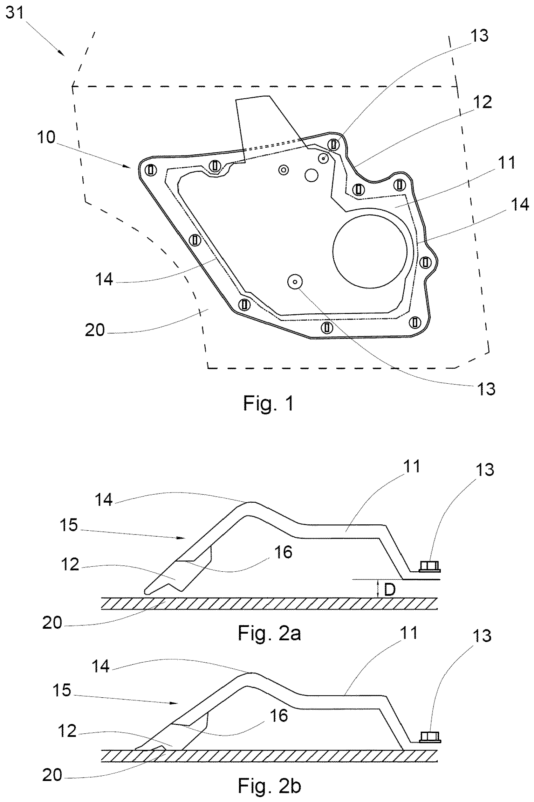

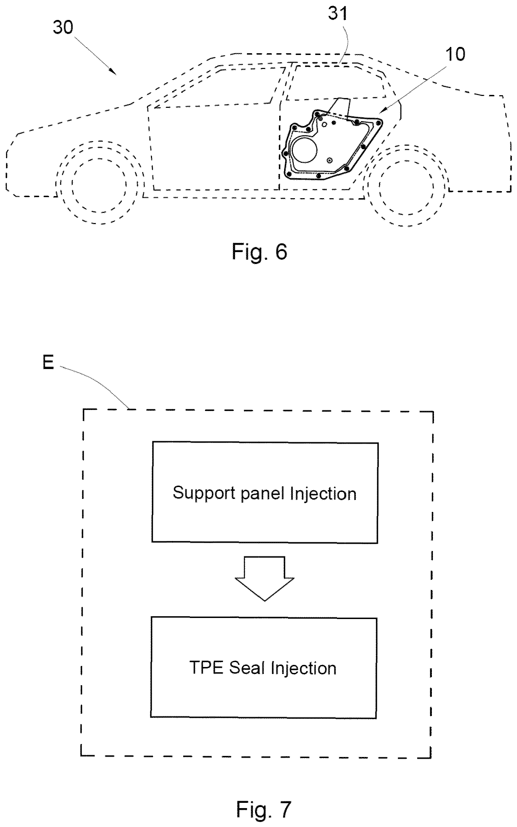

In the present preferred embodiment of the invention, and as portrayed in figures 1 and 2, the door module (10) is formed by a support panel (11) and a seal (12). In the present preferred embodiment, this module (10) is installed on the structure (20) of the door (31) of a vehicle (30), as may be seen in figure 6.

As has been stated, this module (10) may alternatively be installed on other parts of the structure of a vehicle to ensure watertightness between the wet part, susceptible to the entry of water from the exterior, and the interior dry part of the vehicle.

This module (10) features anchor points (13) with which to attach it to the structure (20). It further incorporates cavities, spaces and support points for the attachment of the typical components of the door (31), such as electric windows, loudspeakers, etc.

The module (10) is produced by means of the bi-injection, figure 7, of two materials into the same mould, in a single item of injection equipment (E) and in a practically simultaneous process. This process performs the injection of the material of the support panel (11) in the first instance, polypropylene in this case, this being the first due to its having a greater hardness than the material employed for the seal (12). Immediately afterwards, subsequent to the total solidification of the polypropylene and maintaining the temperature of the mould between 20 and 40 °C, the thermoplastic elastomer is injected at an injection temperature between 140 and 250 °C at the perimeter of the support panel (11) and at the areas required by the design of the module (10), which in alternative embodiments may be anchor points to the structure (20).

Specifically, this bi-injection method, in the particular application to a door module (10) which has one section with greater rigidity than the other, employs injection points for the material of the seal (12) which are remote from the projection of the seal itself on the panel (11) in order not to weaken the same during demoulding.

This method of manufacture enables the production of the support module (10) in a single monoblock item. The module (10) has been configured with a flexing zone (14) at the perimeter zone adjacent to the extremity where the seal (12) is located. This flexing zone (14) is formed with an inverted V-shaped fold in the panel (11), as may be seen in figure 2, with the result that commencing at said flexing zone (14), the wing (15) formed and extending toward the seal (12) can afford a flexing movement with regard to said zone (14), absorbing the pressure at installation and tolerances, and exerting a continuous attachment force on the seal (12), improving its watertightness.

In this case, there are several anchor points (13) between the module (10) and the structure (20) of the door (31), to which a torque of between 4 and 12 Nm is applied. This torque applied at the anchor point (13) entails a force perpendicular to the module (10) which causes the seal (12) to adapt and to generate an effort which is equal throughout the seal surface, corresponding to the internal part of the structure (20) of the door (31), having a maximum deformation (D) of 10 mm at the wing (15).

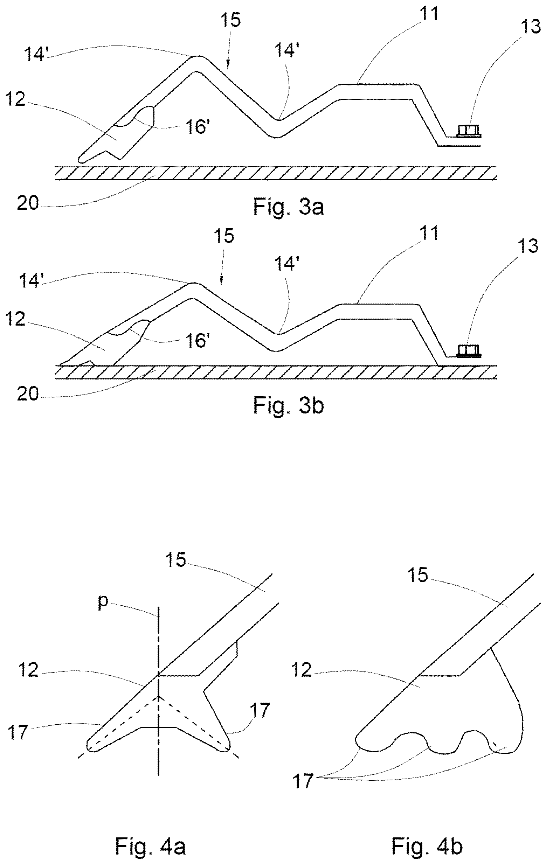

As an alternative to this configuration with one flexing zone (14), there may be a greater number of these zones, as may be seen in figure 3, where there are two flexing zones (14'), the panel at this area forming a Z, flexing at two points.

The zone of the join (16) between the seal (12) and the support panel (11) is formed on a sloping plane, not perpendicular to the surface of the panel (11), having a greater join surface in order to improve still further the already good chemical bond between the TPE and the polypropylene.

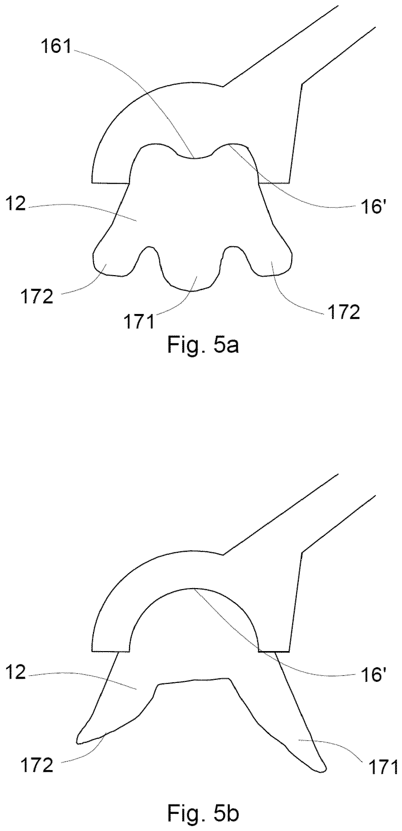

As may be seen in figures 3, 5a and 5b, and with regard to this join zone (16'), the form of the plane forming the bonding surface between the panel (11) and the seal (12) may be of different shapes, such as forming an S (figure 3) or with a convex channel shape (figure 5), with a greater contact surface and non-linear shapes.

As may also be seen in figure 5a, the channel-shaped join zone (16') has an internal surface in the shape of a protrusion (161) which occupies part of the space of the channel (16') to reduce the consumption of material when filling the same with the material of the seal and to increase the properties of rigidity of this zone, as it consists of a protrusion (161) in the form of a longitudinal rib throughout the length of all, or practically all, the channel (16').

Figure 5b shows a seal (12) with the join zone (16') in the shape of a convex channel, with two significantly separated lips sloping in opposite directions and with one lip (171) larger than the other (172).

The seal (12) made from TPE is bi-injected to obtain a seal with a hardness of between 10 and 70 Shore A, an increase over the conventional seals known in the state of the art, but said lower elasticity will be compensated thanks to the increase in elasticity with the new structural design of the wing (15) and its flexing zone (14). By way of an example, among others, styrenic thermoplastic elastomers of 40 Shore A are used, or a vulcanised thermoplastic elastomer of 35 Shore A, etc.

This flexibility of the seal (12), although less than compounds with a lower hardness, also facilitates its deformation for its adaptation to the contact surface of the structure (20) of the door (31). With this flexibility, the sealing is achieved by exerting the force of assembling and attaching the door module (10).

As may be seen in the embodiment in figure 4a, the seal (12) features two lips (17), although it may feature three or more lips, as may be seen in other alternative embodiments, figures 4b and 5a.

In the present embodiment, these two lips (17) are oriented in such a way that on exerting pressure on the panel, these flex in opposite directions. This is achieved thanks to the slope of the lips (17) in one direction and in the other with regard to the perpendicular axis (p) of contact between the structure (20) and the module (10).

Alternatively, one of the lips (171) may be of a greater size than the others (172), as may be seen in figures 5a and 5b, to execute one principal seal and other additional seals. These sizes range between the 2 mm of the smallest lips (172) and the 10 mm of the lip of the largest size (171).

Despite the fact that reference has been made to a specific embodiment of the invention, it is evident for a person skilled in the art that the vehicle door module, as well as the method of manufacture of this module and the vehicle including the same, are susceptible to numerous variations and modifications, and that all the aforementioned details can be replaced by other technically equivalent details without detracting from the scope of the protection defined by the attached claims.

## Claims

1. A door module, of the type installed on the structure of vehicle doors, tailgates or similar, separating the wet area from the dry area of the vehicle, and whereon one or more systems pertaining to the functionalities of the door may be mounted, where the door module comprises a support panel with an at least perimetric seal,
**characterised in that** the support panel (11) and the perimeter seal (12) form a single monoblock assembly obtained by bi-injection or multiple injection in the same step and with the same production equipment (E);
wherein the support panel (11) comprises at its peripheral area, prior to the perimeter seal (12), at least one flexing line or zone (14) of the plane of the panel (11) at said peripheral zone prior to the perimeter seal (12); and
wherein at least at this peripheral zone prior to the seal (12), and starting from said at least one flexing line or zone (14), it presents a flexible movement with regard to the pressure exerted for its (10) attachment to the structure (20) of the door (31).

2. A door module, according to claim 1, wherein the join between the seal (12) and the perimeter of the panel (11) is executed with a joining zone (16) with a transversal cross-section not perpendicular to the surface of the panel (11) at the point of joining, increasing the surface of adhesion between perimeter seal (12) and panel (11), compared with a surface with a transversal cross-section perpendicular to the panel surface (11).

3. A door module, according to claim 1 or 2, wherein the join between the seal (12) and the perimeter of the panel (11) is executed in a manner with a non-rectilinear transversal cross-section, increasing the contact surface between perimeter seal (12) and panel (11) by at least 5% compared with a join with a transversal cross-section perpendicular to the surface of the panel (11).

4. A door module, according to claim 3, wherein the panel (11), at its perimeter zone, comprises a channel (16') to receive the seal (12) with an at least partially convex shape.

5. A door module, according to claim 4, wherein the channel (16') comprises at its internal zone for the fitting of the seal (12) a concave base, a rib or protrusion (161) from its convex shape throughout the length of the channel (16').

6. A door module, according to any of the previous claims, wherein the perimeter seal (12) comprises two sealing lips (17).

7. A door module, according to any of the previous claims, wherein the perimeter seal (12) comprises three or more sealing lips (17).

8. A door module, according to either of claims 6 or 7, wherein the sealing lips (17) slope with regard to the perpendicular axis (p) of the zone of contact between the seal (12) and the structure (20), at least two of these lips(17) remaining on the two sides of said perpendicular (p), one flexing in a direction opposite to that of the other.

9. A door module, according to any of claims 6, 7 or 8, wherein at least some of the sealing lips (17) are of a size greater than that of the others.

10. A door module, according to any of the previous claims, wherein the panel (11) is manufactured from a polymeric material of the polypropylene type in the majority of its composition.

11. A door module, according to any of the previous claims, wherein the seal (12) is comprised of at least a thermoplastic elastomer, vulcanised or otherwise, with a final hardness greater than 10 Shore A.

12. A door module, according to claim 11, wherein the composition of the seal (12) comprises at least thermoplastic elastomer (TPE), thermoplastic polyurethane (TPU), thermoplastic polyolefins (TPO) and/or thermoplastic elastomer vulcanisates (TPV).

13. A vehicle, **characterised in that** at least one of its doors, tailgate or similar comprises a door module (10) such as that mentioned in claims 1 to 12.

14. A method of manufacture of a door module, of the type which execute the joining of a seal to the perimeter of a panel for attachment to the structure of a vehicle door, forming a door module such as that disclosed in claims 1 to 12, **characterised in that** the method comprises at least the following steps:
- injecting into a mould of a polymer of lower elasticity than that of the thermoplastic elastomer corresponding to the seal (12), in order to form the panel (11) of the module;
- injecting, in the same mould, into the cavities peripheral to those into which the panel (11) is injected, of thermoplastic elastomer for the formation of the perimeter seal (12);
wherein the two injection steps are performed in the same injection equipment (E) either simultaneously or immediately consecutively, in this last case injecting first the material of the panel (11), which is more rigid than that of the seal (12).

15. A method of manufacture of a door module, according to claim 14, wherein the injection of the thermoplastic elastomer into the peripheral cavities is performed via two or more injection points located in such a way that the projection of said injection points is remote from the cavity where this seal (12) is created.
